# EUROPEAN PATENT APPLICATION

(11) **EP 4 008 441 A2**
(43) Date of publication of application: **08.06.2022**
(21) Application number: 22168088.7
(22) Date of filing: 13.04.2022
(51) Int. Cl.: B05B 7/04, B05B 7/12, B60S 1/52, B60S 1/54, B05B 1/04, B60S 1/56

(54) **MIXING NOZZLE, SENSOR ASSEMBLY APPARATUS, VEHICLE AND SELF-DRIVING VEHICLE**

(30) Priority: 11.06.2021 CN 202110655805
(71) Applicant: BEIJING BAIDU NETCOM SCIENCE TECHNOLOGY CO., LTD., No. 10 Shangdi 10th Street Haidian District Beijing 100085 (CN)
(72) Inventor: REN, Rui, Beijing 100085 (CN); FAN, Zongtao, Beijing 100085 (CN); WANG, Bolei, Beijing 100085 (CN); HU, Jingsheng, Beijing 100085 (CN); LI, Kang, Beijing 100085 (CN); ZHANG, Yanfu, Beijing 100085 (CN)
(74) Representative: Zanettin, Gianluigi

(57) **Abstract**

Provided are a mixing nozzle, a sensor assembly apparatus, a vehicle and a self-driving vehicle, which relate to the technical field of vehicles and, in particular, to the field of vehicle spray-and-wash apparatuses. The mixing nozzle includes a first connector, a second connector, a first channel and a second channel, where one end of the first channel is connected to the first connector, and the other end of the first channel is provided with a spraying opening in communication with the first channel; one end of the second channel is connected to the second connector, and the other end of the second channel is in through connection with the first channel; the first connector is configured to introduce a first fluid into the first channel, and the second connector is configured to introduce a second fluid into the second channel; and a length of the second channel is less than a length of the first channel. According to the present disclosure, functions of separate spraying of liquid, separate jetting of gas and quantitative atomization are achieved, the waste of resources is effectively reduced, and secondary pollution on the cleaned surface is avoided. Moreover, the simple structure, high degree of integration and small occupied space of the mixing nozzle in the present disclosure facilitate the layout and mounting.

## Description

### TECHNICAL FIELD

The present disclosure relates to the technical field of vehicles and in particular, to the technical field of vehicle spray-and-wash apparatuses.

### BACKGROUND

Today's vehicles use more and more sensors. To keep the sensing region of a sensor clean, the sensor is generally equipped with a mixing nozzle such as a water flow nozzle, which cleans the sensor's sensing region by spraying washer fluid or cleaning liquid.

At present, most of sensors on the market are cleaned by water flow nozzles. Due to the large number of sensors of a vehicle, a large amount of cleaning liquid is required, which increases the burden on the vehicle body. At the same time, after the cleaning liquid is sprayed, relatively much cleaning liquid will remain in the nozzle cavity, which not only causes the waste of cleaning liquid, but also easily leads to nozzle blockage or corrosion. In addition, after the cleaning by water flow, water spots tend to remain on the sensor surface, the water spots mix with dust and dry and thus form dust spots on the sensor surface, resulting in secondary pollution on the sensor surface. More, if air flow nozzles are further added, the layout of the spray-and-wash apparatus will be crowded and the appearance will not be simple enough.

### SUMMARY

The present disclosure provides a mixing nozzle and a sensor assembly apparatus, a vehicle and a self-driving vehicle having the mixing nozzle. The mixing nozzle can effectively reduce the waste of resources and avoid secondary pollution on a cleaned surface, have a simple structure and a higher degree of integration and occupies small space.

According to an aspect of the present disclosure, a mixing nozzle is provided. The mixing nozzle includes a first connector, a second connector, a first channel and a second channel, where one end of the first channel is connected to the first connector, and the other end of the first channel is provided with a spraying opening in communication with the first channel; one end of the second channel is connected to the second connector, and the other end of the second channel is in through connection with the first channel; the first connector is configured to introduce a first fluid into the first channel, and the second connector is configured to introduce a second fluid into the second channel; and a length of the second channel is less than a length of the first channel.

According to another aspect of the present disclosure, a vehicle is provided. The vehicle includes the preceding mixing nozzle.

According to another aspect of the present disclosure, a sensor assembly apparatus is provided. The sensor assembly apparatus includes a sensor and the preceding mixing nozzle.

According to another aspect of the present disclosure, a self-driving vehicle is provided. The self-driving vehicle includes an automatic control apparatus and the preceding mixing nozzle.

The mixing nozzle provided by the present disclosure can achieve separate spraying of liquid, during which the liquid enters through the second connector, then flows through the second channel and the first channel, and is sprayed out from the spraying opening. The mixing nozzle provided by the present disclosure can further achieve separate jetting of gas, during which the gas enters through the first connector, then flows through the first channel, and is jetted from the spraying opening. The mixing nozzle provided by the present disclosure can further achieve quantitative atomization, so that residual droplets are reduced, and liquid consumption is reduced. During this process, firstly, a small amount of liquid is injected into the second connector, the liquid flows through the second channel and reaches and stays in the first channel, then pressure gas is injected from the first connector, the pressure gas flows through the first channel, and the liquid in the first channel is atomized and sprayed out from the spraying opening, so that a fine atomization effect is achieved. Moreover, since the length of the second channel is relatively small, little liquid remains in the second channel; therefore, the water remaining phenomenon is not easy to occur after the atomization due to relatively less residual liquid in the second channel, the waste of excess liquid is avoided, and the blockage caused by liquid drying in the channel is not easy to occur. In the present disclosure, an air flow nozzle and a water flow nozzle are effectively combined, which simplifies the structure of the nozzle, improves the degree of integration, reduces the occupied space, and facilitates layout and mounting. When stains are being cleaned, it is feasible to clean the strains by atomizing and spraying the liquid for multiple times in small amounts. In this way, less cleaning liquid is consumed during cleaning without dripping and leaking. After the atomized liquid is sprayed, it may be quickly switched to jet dry gas to dry the cleaned surface, so that secondary pollution is avoided.

It is to be understood that the content described in this part is neither intended to identify key or important features of embodiments of the present disclosure nor intended to limit the scope of the present disclosure. Other features of the present disclosure are apparent from the description provided hereinafter.

### BRIEF DESCRIPTION OF DRAWINGS

The drawings are intended to provide a better understanding of the present solution and not to limit the present disclosure.
FIG. 1 is a structural view of a mixing nozzle according to an embodiment of the present disclosure;
FIG. 2 is a sectional view of a mixing nozzle according to an embodiment of the present disclosure; and
FIG. 3 is a structural view of a sensor assembly apparatus according to an embodiment of the present disclosure.

### Reference list

- 1: first connector
- 2: second connector
- 3: first check valve
- 4: second check valve
- 5: first channel
- 6: second channel
- 7: spraying opening
- 100: mixing nozzle
- 200: sensor

### DETAILED DESCRIPTION

Example embodiments of the present disclosure, including details of embodiments of the present disclosure, are described hereinafter in conjunction with the drawings to facilitate understanding. The example embodiments are merely illustrative.

In the description of the present disclosure, unless otherwise expressly specified and limited, the term "connected to each other", "connected" or "fixed" is to be construed in a broad sense, for example, as securely connected, detachably connected or integrated; mechanically connected or electrically connected; directly connected to each other or indirectly connected to each other via an intermediary; or internally connected between two components or interaction relations between two components. For those of ordinary skill in the art, specific meanings of the preceding terms in the present disclosure may be understood based on specific situations.

In the present disclosure, unless otherwise expressly specified and limited, when a first feature is described as "on" or "below" a second feature, the first feature and the second feature may be in direct contact or may be in contact via another feature between the two features instead of being in direct contact. Moreover, when the first feature is described as "on", "above" or "over" the second feature, the first feature is right on, above or over the second feature or the first feature is obliquely on, above or over the second feature, or the first feature is simply at a higher level than the second feature. When the first feature is described as "under", "below" or "underneath" the second feature, the first feature is right under, below or underneath the second feature or the first feature is obliquely under, below or underneath the second feature, or the first feature is simply at a lower level than the second feature.

In the description of the present disclosure, the orientations or position relations indicated by terms such as "above", "below", "left", "right" and the like are based on the drawings. These orientations or position relations are intended only to facilitate and simplify description of the present disclosure, and not to indicate or imply that a device or element referred to must have such specific orientations or must be configured or operated in such specific orientations. Thus, these orientations or position relations are not to be construed as limiting the present disclosure. In addition, the terms "first" and "second" are used only to distinguish between descriptions and have no special meaning.

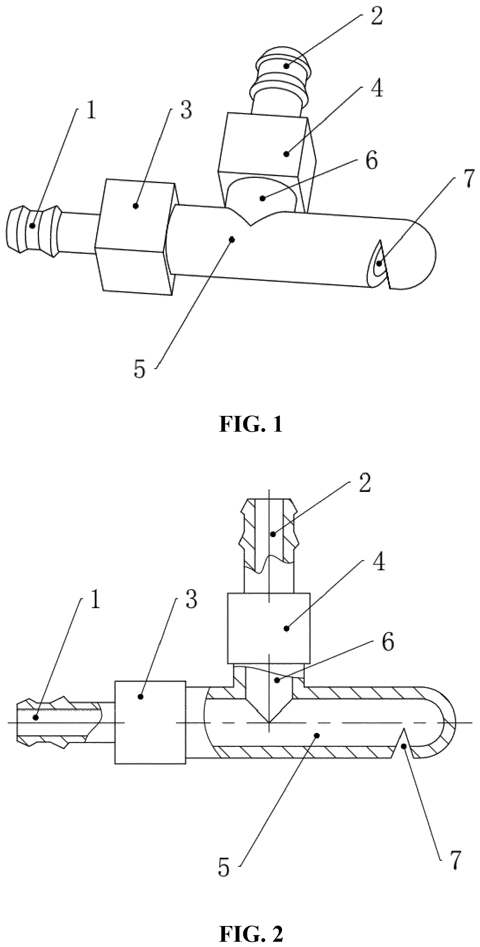

As shown in FIGS. 1 and 2, the embodiment provides a mixing nozzle that may be used on transport to achieve cleaning of sensors, lenses, glass and other elements as well as in other occasions where cleaning by nozzles is desired. The mixing nozzle includes a first connector 1, a second connector 2, a first channel 5 and a second channel 6. The first connector 1 is configured to introduce a first fluid into the first channel 5, and the second connector 2 is configured to introduce a second fluid into the second channel 6. For example, the first fluid may be gas, and the first connector 1 may be connected to a gas supply device via a hose; the second fluid may be liquid, and the second connector 2 may be connected to a liquid supply device via a hose. One end (i.e., the first end) of the first channel 5 is connected to the first connector 1, and the other end (i.e., the second end) of the first channel 5 is provided with a spraying opening 7 in communication with the first channel 5. The spraying opening 7 may spray fluid under pressure at an accelerated rate to clean a to-be-cleaned surface. One end (i.e., the first end) of the second channel 6 is connected to the second connector 2, and the other end (i.e., the second end) of the second channel 6 is in through connection with the first channel 5, so that liquid in the second channel 6 can enter the first channel 5. In the embodiment, the first fluid may flow through the first channel 5 via the first connected 1 to be sprayed out at an accelerated rate from the spraying opening 7; and the second fluid may flow through the second channel 6 via the second connector 2 to reach the first channel 5 and to be sprayed out at an accelerated rate from the spraying opening 7. Alternatively, after the second fluid reaches the first channel 5, the second fluid stays in the first channel 5, and when the first fluid flows through the first channel 5, the second fluid mixes with the first fluid and the second fluid and the first fluid are sprayed out from the spraying opening 7 together. In the embodiment, a length of the second channel 6 is less than a length of the first channel 5. For example, the length of the second channel 6 is relatively small, for example, the length of the second channel 6 may be a tenth to a half, such as, a quarter or a fifth, of the length of the first channel 5. In this way, the liquid remaining in the second channel 6 is reduced, the waste is avoided, and it is convenient for the gas in the first channel 5 to dry droplets in the second channel 6.

The mixing nozzle provided by the embodiment can achieve separate spraying of liquid, during which the liquid enters through the second connector 2, then flows through the second channel 6 and the first channel 5, and is sprayed out from the spraying opening 7. The mixing nozzle provided by the embodiment can further achieve separate jetting of gas, during which the gas enters through the first connector 1, then flows through the first channel 5, and is jetted from the spraying opening 7. The mixing nozzle provided by the embodiment can further achieve quantitative atomization, so that residual droplets are reduced, and liquid consumption is reduced. During this process, firstly, a small amount of liquid is injected into the second connector 2, the liquid flows through the second channel 6 and reaches and stays in the first channel 5, then pressure gas is injected from the first connector 1, the pressure gas flows through the first channel 5, and the liquid in the first channel 5 is atomized and sprayed out from the spraying opening 7, so that a fine atomization effect is achieved. Moreover, since the length of the second channel 6 is relatively small, little liquid remains in the second channel 6; therefore, the water remaining phenomenon is not easy to occur after the atomization due to relatively less residual liquid in the second channel 6, the waste of excess liquid flow is avoided, and the blockage caused by liquid drying in the channel is not easy to occur. In the embodiment, an air flow nozzle and a water flow nozzle are effectively combined, which simplifies the structure of the nozzle, improves the degree of integration, reduces the occupied space, and facilitates layout and mounting. When stains are being cleaned, it is feasible to clean the strains by atomizing and spraying the liquid for multiple times in small amounts. In this way, less cleaning liquid is consumed during cleaning without dripping and leaking. After the atomized liquid is sprayed, it may be quickly switched to jet dry gas to dry the cleaned surface, so that secondary pollution is avoided.

Optionally, a first check valve 3 is further disposed between the first connector 1 and the first channel 5 for unidirectionally introducing a fluid from the first connector 1 to the first channel 5 and not for introducing in a reverse direction, in this way, the liquid flow will not flow into the first connector 1; optionally, the opening of the first check valve 3 needs a certain opening pressure, so that only when the pressure of the fluid in the first connector 1 reaches a set value, the fluid will enter the first channel 5 from the first connector 1, thereby avoiding leakage of the fluid from the first connector 1. Optionally, a second check valve 4 is disposed between the second connector 2 and the second channel 6 for unidirectionally introducing a fluid from the second connector 2 to the second channel 6 and not for introducing in a reverse direction, in this way, the gas flow will not flow into the second connector 2; optionally, the opening of the second check valve 4 needs a certain opening pressure, so that only when the pressure of the fluid in the second connector 2 reaches a set value, the fluid will enter the second channel 6 from the second connector 2, thereby avoiding leakage of the fluid from the second connector 2. In the embodiment, the first check valve 3 and the second check valve 4 are provided to ensure the reliability of use of the mixing nozzle. Since the second channel 6 of the embodiment is relatively short and the outlet of the second channel 6 is relatively close to the second check valve 4, little liquid remains on the wall of the second channel 6, and it is more easy for the air flow flowing through the first channel 5 to dry droplets in the second channel 6.

In an embodiment, the first channel 5 may be a straight channel, or an arc-shaped channel curved along an arc line or a bent channel bent at a certain angle, so as to be able to adapt to different mounting requirements in different use scenarios. Thus, the applicability of the mixing nozzle is improved. For example, when the first channel 5 is a bent channel, the second channel 6 is connected to the bent portion of the first channel 5 to improve the smoothness of the fluid flowing. In other embodiments, the second channel 6 may also be connected to other positions of the first channel 5 without being limited in the embodiment. In addition, in the embodiment, the second channel 6 and the first channel 5 may be located in the same plane or different planes, which may be arranged according to actual requirements.

In an embodiment, the second channel 6 is disposed at an angle to the first channel 5. The angle may be a right angle, an acute angle or an obtuse angle, so that the mounting and use requirements in different occasions can be satisfied. The second channel 6 may be disposed at any position in the length direction of the first channel 5, for example, at a position of the first channel 5 close to the first check valve 3, so that the mixing nozzle is more compact in structure and easy to mount on a vehicle. For example, as shown in FIG. 1 and FIG. 2, in the embodiment, the second channel 6 is perpendicular to the first channel 5. In this way, the position where the second channel 6 is in through connection with the first channel 5 has a relatively large area, and the smoothness of the fluid flowing is further improved.

For example, in the embodiment, the first channel 5 is integrally formed with the second channel 6 by machining, so that on the one hand, the machining process of the mixing nozzle can be simplified, and on the other hand, the structural strength of the mixing nozzle can be effectively improved, while the leakproofness of the position where the first channel 5 is connected to the second channel 6 is ensured. For example, a material of the first channel 5 and a material of the second channel 6 are engineering plastic, such as Acrylonitrile-Butadiene-Styrene (ABS) and the like, and the first channel 5 may be integrally formed with the second channel 6 by injection molding. In this way, the structural strength of the first channel 5 and the second channel 6 is ensured, the weight of the nozzle is reduced, and the production cost is effectively reduced. Moreover, the engineering plastic has good corrosion resistance, so that the nozzle can be prevented from being corroded by the cleaning liquid, and thereby the service life of the nozzle is improved.

Optionally, in the embodiment, the spraying opening 7 is provided in a circumferential wall of the first channel 5, and the direction towards which the spraying opening 7 is provided is the spraying direction of the fluid. In the present embodiment, the spraying direction of the fluid may be changed according to different deployment directions of the spraying opening of the spraying opening 7, so as to satisfy different use requirements. For example, the number of the spraying openings 7 in the embodiment is not limited to one, but may be set to two, three, four or more to achieve the effect of simultaneous spraying in multiple directions. For example, multiple spraying openings 7 are evenly arranged along the circumferential wall of the first channel 5 to improve the uniformity of spraying. In an embodiment, the spraying opening 7 is in a shape of a bell mouth that gradually widens from inside to outside. The bell-mouth-shaped spraying opening 7 enables the fluid to be sprayed out more smoothly, is prevented from being blocked, better adapts to the spraying of liquid in high concentration, and thus has a large spraying area and a good cleaning effect. In other embodiments, the spraying opening 7 may also be set as in a fan shape of or other shapes, without being limited in the embodiment.

In an embodiment, the mixing nozzle may further include a heating element. The heating element is directly inserted into and mounted in the first channel 5, or the heating element is disposed on an outer side of the first channel 5. Through the heating element, on the one hand, the liquid flowing through the first channel 5 can be heated to be prevented from freezing in a cold environment; on the other hand, the gas flowing through the first channel 5 can also be heated to accelerate the drying of droplets on the cleaned surface and in the channel. In addition, a temperature sensor may further be disposed in the first channel 5 to obtain the temperature of the fluid in the first channel 5, so that the operation of the heating element can be better controlled.

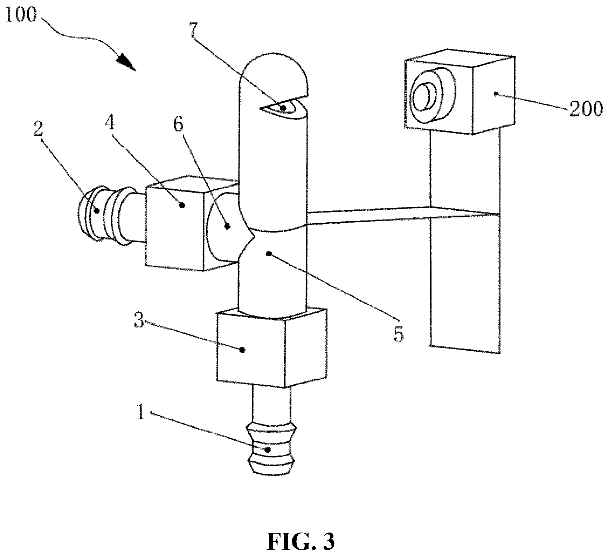

As shown in FIG. 3, the embodiment further provides a sensor assembly apparatus. The sensor assembly apparatus includes a sensor 200 and the preceding mixing nozzle 100. The sensor 200 is, for example, a camera, radar and the like, and the sensor 200 may be connected to the mixing nozzle 100 by a fixed connecting apparatus or a movable connecting apparatus to form the assembly apparatus. For example, in the present embodiment, one, two or more sensors 200 may be provided according to requirements, and types of the sensors 200 may be the same or different. The assembly apparatus can achieve functions of separate spraying of liquid, separate jetting of gas and quantitative atomization for the sensor 200, which effectively reduce the waste of resources and avoid secondary pollution on the cleaned surface. Moreover, the simple structure, high degree of integration and small occupied space of the mixing nozzle 100 facilitates the layout and mounting.

The embodiment further provides a self-driving vehicle. The self-driving vehicle includes a vehicle body, an automatic control apparatus and the preceding mixing nozzle. The self-driving vehicle can automatically control the injection of gas or liquid into the mixing nozzle, so as to achieve functions of separate spraying of liquid, separate jetting of gas and quantitative atomization. In the embodiment, the waste of resources is effectively reduced, the burden on the vehicle body is reduced, and secondary pollution on the cleaned surface is avoided. Moreover, the simple structure, high degree of integration and small occupied space of the mixing nozzle facilitates the layout and mounting of the mixing nozzle in the limited space on the self-driving vehicle.

The embodiment further provides a vehicle, which may be a sedan, a passenger car, a truck, various engineering vehicles and the like, and the preceding mixing nozzle is mounted on the vehicle. The mixing nozzle may spray liquid, gas, or atomized liquid to clean sensors, lenses, glass and other elements on the vehicle. The vehicle of the embodiment adopts the preceding mixing nozzle and thus achieves functions of separate spraying of liquid, separate jetting of gas and quantitative atomization. In this way, the waste of resources is effectively reduced, the burden on the vehicle body is reduced, and secondary pollution on the cleaned surface is avoided. Moreover, the simple structure, high degree of integration and small occupied space of the mixing nozzle facilitates the layout and mounting of the mixing nozzle in the limited space on the vehicle.

## Claims

1. A mixing nozzle, comprising a first connector (1), a second connector (2), a first channel (5) and a second channel (6), wherein a first end of the first channel (5) is connected to the first connector (1), and a second end of the first channel (5) is provided with a spraying opening (7) in communication with the first channel (5); a first end of the second channel (6) is connected to the second connector (2), and a second end of the second channel (6) is in through connection with the first channel (5); the first connector (1) is configured to introduce a first fluid into the first channel (5), and the second connector (2) is configured to introduce a second fluid into the second channel (6); and a length of the second channel (6) is less than a length of the first channel (5).

2. The mixing nozzle according to claim 1, further comprising at least one of a first check valve (3) or a second check valve (4), wherein
the first check valve (3) is disposed between the first connector (1) and the first channel (5) for unidirectionally introducing a fluid from the first connector (1) to the first channel (5);
the second check valve (4) is disposed between the second connector (2) and the second channel (6) for unidirectionally introducing a fluid from the second connector (2) to the second channel (6).

3. The mixing nozzle according to claim 1, wherein the first channel (5) is a straight channel, an arc-shaped channel or a bent channel.

4. The mixing nozzle according to claim 1, wherein the second channel (6) is disposed at an angle to the first channel (5).

5. The mixing nozzle according to claim 4, wherein the second channel (6) is perpendicular to the first channel (5).

6. The mixing nozzle according to claim 1, wherein the first channel (5) is integrally formed with the second channel (6).

7. The mixing nozzle according to claim 1, wherein a material of the first channel (5) and a material of the second channel (6) are engineering plastic.

8. The mixing nozzle according to any one of claims 1 to 7, wherein the spraying opening (7) is provided in a circumferential wall of the first channel (5), and a number of the spraying opening (7) is one or more.

9. The mixing nozzle according to any one of claims 1 to 7, wherein the spraying opening (7) is in a shape of a bell mouth that gradually widens from inside to outside.

10. A vehicle, comprising the mixing nozzle of any one of claims 1 to 9.

11. A sensor assembly apparatus, comprising a sensor and the mixing nozzle of any one of claims 1 to 9.

12. A self-driving vehicle, comprising an automatic control apparatus and the mixing nozzle of any one of claims 1 to 9.
